# DEMANDE DE BREVET EUROPEEN

(11) **EP 3 556 827 A1**
(43) Date de publication de la demande: **23.10.2019**
(21) Numéro de dépôt: 18020160.0
(22) Date de dépôt: 18.04.2018
(51) Int. Cl.: C10G 29/06, C10G 29/16, C08L 95/00, C10C 3/02

(54) **PROCÉDÉ DE PRÉPARATION DE COMPOSITION DE BITUME POLYMÈRE RÉTICULÉ À FAIBLE ÉMISSION D'H2S ET APPLICATION DE CES COMPOSITIONS À LA RÉALISATION DE REVÊTEMENTS**

(71) Demandeur: Valochem SARL, 69390 Vourles (FR)
(72) Inventeur: Valochem SARL, 69390 Vourles (FR)

(57) **Abrégé**

Dans le cadre de la réalisation de compositions bitumineuses, le demandeur à découvert de façon surprenante que l'utilisation de donneur de soufre liquide avait pour avantage, contrairement au soufre solide, même finement divisé, une diffusion homogène de ce dernier dans la matrice bitume/polymère améliorant ainsi les propriétés finales du PmB.

Il a également été découvert que l'utilisation d'alkyl polysulfure, en lieu et place de soufre solide, conduisait à une réduction significative des émissions d'H₂S lors de la fabrication et/ou utilisation de PmB.

Il a été également découvert que l'utilisation combinée d'un donneur de soufre liquide et d'un scavenger d'H₂S liquide permettait une réduction encore plus importante des émissions d'H₂S lors de la fabrication et/ou utilisation de PmB.

Enfin, il a été également découvert que l'utilisation de tels additifs sous forme liquide était un vrai avantage industriel de part la sécurité que cela apporte comparativement à l'utilisation de soufre pulvérulent.

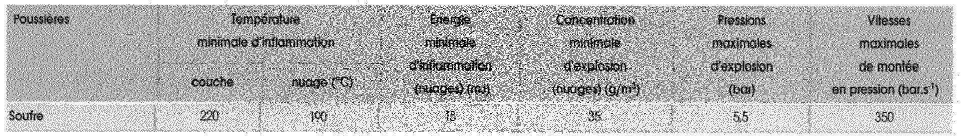

Il est ici rappelé que le terme anglo-saxon « scavenger d'H₂S » désigne un agent apte à neutraliser et/ou piéger le sulfure d'hydrogène.

Selon l'invention, l'objectif de l'invention est atteint via l'utilisation d'un additif seul choisi parmi les polysulfures d'alkyle, aliphatique, alicyclique ou aromatique.

Le polysulfure d'alkyle est avantageusement choisi, mais de façon non restrictive, parmi le disulfure de dihexyle, disulfure de dioctyle, disulfure de didodécyle, disulfure de ditertiododécyle, disulfure de dihexidécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, trétrasulfure de dihexadécylc, pentasulfure de dihexyle, pentasulfure de dioctyle, pentasulfure de dinonyle, pentasulfure de ditertiododécyle, pentasulfure de dihexadécyle. D'autres polysulfures, qui peuvent être utilisés suivant l'invention, sont tels que le trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Selon un mode particulier de l'invention le donneur de soufre de type alkyle polysulfure est un produit liquide.

Selon l'invention, le but de l'invention peut également être atteint par l'utilisation combinée d'un polysulfure d'alkyle et d'un scavenger d'H₂S sélectionné parmi les sels métalliques organiques ou inorganiques.

Le scavenger d' H₂S est, avantageusement, choisi parmi les sels métalliques consistant aux oxydes, hydroxydes, hydrates, carbonates, hydrycarbonates, craboxylates, nitrates, phosphates et leurs mélanges.

Selon un mode particulier de l'invention le scavenger d'H₂S est un produit liquide faisant partie des familles d'oxydes métalliques précédemment citées.

Selon un autre mode particulier de l'invention le métal constituant le sel métallique se trouve parmi, le zinc, cadmium, mercure, cuivre, argent, nickel, platine, fer et/ou magnésium ou encore des mélanges de différents sels.

Selon l'invention, le but de l'invention est égaiement atteint par un procédé de préparation d'une composition bitumineuse, dans lequel on met en contact du bitume, de 0,5% à 10% en masse, de préférence entre 1% et 6% en masse, plus préférentiellement entre 1,5% et 4% en masse d'un élastomère, et d'un agent de couplage donneur de soufre ajouté en quantité propre à fournir de 0,1 % à 20% en masse, avantageusement de 1% à 10% en masse, de préférence de 1% à 6% en masse, plus préférentiellement de 2% à 5% en masse de soufre libre par rapport à la masse d'élastomère réticulable au soufre dans ladite composition en opérant à des températures comprises entre 90°C et 200°C, de préférence entre 120°C et 200°C, plus préférentiellement entre 170°C et 190°C, et sous agitation pendant une durée d'au moins 10 minutes, avantageusement d'au moins 2 heures, de préférence entre 20 minutes et 6 heures, plus préférentiellement entre 30 minutes et 2 heures, ledit agent donneur de soufre étant tel que définis ci-dessus. Etant entendu que la composition bitumineuse obtenue est alors une composition bitume/polymère et que les pourcentages massiques sont calculés par rapport à la masse totale de la composition bitume/polymère.

Selon un mode de réalisation particulier de l'invention, l'agent de couplage est une composition dans laquelle on retrouve un alkyl polysulfure et un scavenger d'H₂S.

Selon un autre mode particulier de l'invention la composition de couplage est composé de 50% à 70% d'alkyle polysulfure et de 30% à 50% de scavenger d'H₂S, de préférence entre 60% et 70% d'alkyle polysulfure et de 30% à 40% de scavenger d'H₂S.

Selon une variante préférée, l'élastomère est choisi parmi les copolymères statistiques ou séquencés d'un hydrocarbure monovinyl aromatique et d'un diène conjugué.

L'élastomère comprend, avantageusement, entre 5 % et 50% en masse, de préférence entre 15% et 40% en masse d'hydrocarbure monovinyl aromatique.

L'élastomère est, de préférence, choisi parmi les copolymères statistiques ou séquencés de styrène et d'un diène conjugué.

Selon un développement particulier, la masse moléculaire moyenne en masse de l'élastomère est comprise entre 10 000 et 600 000 daltons, de préférence entre 30 000 et 400 000 daltons.

Selon l'invention, le but de l'invention est également atteint par une composition bitumineuse susceptible d'être obtenue par le procédé de préparation tel que défini ci-dessus.

L'invention concerne également un liant bitumineux comprenant une composition bitumineuse telle que définie ci-dessus.

L'invention concerne également un asphalte comprenant un liant bitumineux tel que décrit ci-dessus, et des charges minérales et/ou synthétiques.

L'invention concerne en outre un enrobé bitumineux comprenant un liant bitumineux tel que décrit ci-dessus, des granulats, et éventuellement des charges minérales et/ou synthétiques.

## Description

### DOMAINE TECHNIQUE

La présente invention fait partie du domaine technique des compositions bitumineuses et des additifs de performance utilisés pour les produire. Plus précisément, elle concerne les compositions bitumineuses modifiées par des polymères et leur procédé de préparation.

L'invention concerne également l'utilisation de telles compositions bitumineuses dans les domaines des applications routières et industrielles. Notamment dans la fabrication de liants routiers mais aussi des matériaux bitumineux en découlant tels que les enrobés bitumineux à chaud, les enrobés bitumineux tièdes, les enrobés à froid, les asphaltes, les enduits superficiels ainsi que les revêtements intérieurs et extérieurs.

### ART ANTERIEUR

L'utilisation de compositions bitumineuses (bitumes ou bitumes modifiés polymère) dans la préparation d'enrobés bitumineux (bitume et granulats et/ou agrégats d'enrobés) utilisés comme matériaux de revêtement routier est connue de longue date. En effet, le bitume de part ses propriétés de durabilité, d'adhésivité et de faible coût est le principal liant hydrocarboné utilisé dans la construction routière et le génie civil.

Pour pouvoir être utilisé comme liant dans ces différents secteurs d'activité, le bitume doit présenter certaines propriétés physiques, mécaniques et dynamiques. Pour assurer une performance acceptable des matériaux traités aux liants hydrocarbonés, les organismes publics et d'État publient des normes que les liants bitumineux, doivent respecter. Ces normes stipulent certaines caractéristiques et spécifications telles que le point de ramollissement, la pénétrabilité à 25°C, la résistance au durcissement à 163°C, le point éclair, la solubilité, l'indice de pénétrabilité, la viscosité dynamique à 60°C, le point de fragilité Fraass, et la viscosité dynamique à 135°C. Chacun de ces paramètres définit une caractéristique critique du liant bitumineux, et les liants ne répondant pas à un ou plusieurs de ces paramètres sont considérés comme inutilisables dans la fabrication de matériau de revêtement routier.

Les bitumes conventionnels ne répondent pas simultanément à toutes les exigences particulières des spécifications et, si ces spécifications ne sont pas respectées, le revêtement routier résultant de l'utilisation de ces compositions bitumineuses (liants bitumineux ou bitume pur) peut être sous-dimensionné par rapport à l'application visée, conduisant ainsi à un endommagement rapide de la chaussée. Ces dommages peuvent comprendre, mais sans s'y limiter, la déformation permanente, la fissuration thermique et la fatigue excessive. Ces dommages enfin, réduisent considérablement la durée de vie effective des routes pavées, accélérant son vieillissement jusqu'à atteindre le stade ultime de l'usure à savoir la ruine.

A cet égard, il est reconnu depuis longtemps que les propriétés des compositions bitumineuses conventionnelles, définis ici comme les « bitumes purs », peuvent être modifiés par l'addition d'autres substances, telles que des polymères. On appellera alors ces compositions bitumineuses modifiées polymères des bitumes modifiés polymère. Une grande variété de polymères peut être utilisée comme additifs dans les bitumes modifié polymère. Par exemple, les polymères qui peuvent être utilisés pour la fabrication de tels liants sont le polyisoprène, le caoutchouc butyle, le polyisobutène, le copolymère d'éthylène et d'acétate de vinyle, le polymethacrylate, le polychloroprène, les terpolymères d'éthylène, d'acrylate ou de méthacrylate et de l'anhydride maléique, et les copolymères dérivés du styrène et des diènes conjugués. Parmi ces différents polymères possibles, des polymères statistiques ou séquencé de styrène et de diène conjugué, et notamment de styrène et de butadiène ou de styrène et d'isoprène, sont connus pour être particulièrement efficaces car ils se dissolvent très facilement dans les bitumes et leurs confèrent de très bonnes propriétés mécaniques et notamment d'excellentes propriétés de visco-élasticité. Parmi les différentes améliorations, on note un point de ramollissement élevé, une viscoélasticité accrue, une force sous contrainte accrue, une meilleure récupération à la déformation, et l'amélioration des caractéristiques de déformation à basse température par rapport aux bitumes purs et/ou aux liants résiduels des émulsions de bitume pur.

Toutefois, il peut parfois être observé lors du stockage des bitumes modifiés polymère que ceux-ci sont instables et que le polymère et le bitume se séparent. Ceci se traduit par des lots de bitume modifié de qualité variable, hors spécifications. Il est reconnu que l'on peut améliorer la stabilité des compositions bitumineuses modifiées polymère, et ainsi élargir leur domaine d'utilisation, par l'addition d'agents de réticulation (agents de vulcanisation ou de couplage) tels que le soufre, fréquemment sous la forme de soufre élémentaire solide. On pense que le soufre couple chimiquement le polymère et le bitume par l'intermédiaire de ponts sulfure et / ou polysulfure. L'addition extérieure de soufre est donc parfois nécessaire pour améliorer la stabilité du bitume modifié polymère, et ceci même si le bitume de base contient naturellement des quantités variables de soufre natif. On peut citer ici les documents FR 2376188, FR 2429241, FR2528439, EP030656 comme exemples de procédé faisant intervenir un copolymère statistique ou séquencé de styrène et d'un diène conjugué réticulé au soufre. Le document FR2528439 traite plus particulièrement de la réticulation à l'aide d'un donneur de soufre de type alkyl polysulfure. Enfin, le document EP0360656 décrit l'utilisation d'un accélérateur de vulcanisation donneur de soufre utilisé seul ou en association avec du soufre chimiquement non lié et/ou un polysulfure ou un accélérateur de vulcanisation non donneur de soufre.

Les compositions bitumineuses bitume/polymère ainsi obtenues sont aussi connues sous différents noms, liants bitume/polymère, mélange asphalte/polymère, polymer modified asphalt (PmA), ou encore polymer modified bitumen (PmB). Pour des raisons de clarté l'acronyme PmB sera utilisé dans la suite de ce document pour désigner les bitumes modifiés polymère.

Les PmB, quoi que nettement plus performants que les bitumes purs, ne présentent pas toujours les caractéristiques optimales souhaitées pour répondre systématiquement aux exigences structurelles et de travail croissantes imposées aux structures routières. Afin d'atteindre le niveau de performance souhaité du PmB, il est nécessaire d'en évaluer la formulation en regard des caractéristiques souhaitées. On appele cette étape de laboratoire l'épreuve de formulation.

La pratique générale de modification des bitumes ou de fabrication des PmB consiste à utiliser un seul polymère, de même qu'un réactif qui favorise la réticulation des molécules de polymère jusqu'à ce que les propriétés souhaitées du liant soient satisfaites. Ce réactif est typiquement du soufre ou un donneur de soufre sous une forme donnée et souvent sous forme de poudre.

Dans les PmB, le coût du polymère augmente significativement le coût global du liant résultant. Ainsi, si on relie directement le coût du liant à sa teneur en polymère et la teneur en polymère à la performance finale du liant, les facteurs de coût du PmB pèsent fortement dans la capacité qu'ont les enrobés bitumineux formulés à partir de tels liants à répondre aux critères de durabilité/performance/coût demandés par le marché. Il existe donc un besoin pour dé-corréler l'aspect performance de l'aspect prix. Un moyen d'y parvenir est l'utilisation d'agent réticulant ou d'une composition réticulante permettant l'optimisation du taux de polymère employé dans la fabrication du PmB et donc également d'optimiser sa structure de coût.

Lors de la préparation du PmB, une agitation importante ainsi qu'une température élevée sont nécessaires pour assurer l'homogénéité à la fois entre le bitume et le polymère mais aussi avec les éventuels agents de réticulation. Ces conditions opératoires ont une incidence importante sur une problématique bien connue liée à la fabrication et à l'utilisation de PmB, à savoir la génération de sulfure d'hydrogène ou encore d'hydrogène sulfuré, noté ici H₂S. L'émission d'H₂S est nettement plus importante lors de la préparation de bitume polymère réticulé du fait de l'utilisation d'agent réticulant donneur de soufre dans leur procédé de fabrication. Le H₂S est un gaz incolore, toxique et explosif sous certaines conditions. Pour des raisons de sécurité, de santé et de protection environnementale, la réduction du niveau d'émission de H₂S dans les PmB est un enjeu industriel important.

Des solutions ont été proposées dans la littérature pour réduire les émissions d'H₂S lors de la fabrication et de l'utilisation des PmB. En particulier, l'ajout d'un agent chimique apte à piéger le sulfure d'hydrogène lors de l'étape de réticulation a été proposé pour remédier à cet inconvénient. A titre d'exemple on peut citer le brevet WO2005065177, présentant l'utilisation de sels métalliques organiques ou inorganiques dans de telles applications.

L'objet de la présente invention concerne l'amélioration des propriétés mécaniques et dynamiques des compositions bitumineuses tout en réduisant les risques d'émission de H₂S lors de la préparation et de l'utilisation de telles compositions bitumineuses.

Un autre objet de l'invention consiste à proposer un agent réticulant donneur de soufre liquide ou une composition réticulante contenant ledit donneur de soufre ainsi qu'un agent apte à piéger les émissions d'hydrogène sulfuré, toujours sous forme liquide.

La présente invention concerne également un procédé de préparation de telles compositions bitumineuses intégrant l'agent réticulant ou la composition réticulante précitée.

Enfin, la présente invention concerne également l'utilisation des compositions bitumineuses ainsi obtenues dans la fabrication de matériaux routiers et/ou industriels.

### BREVE DESCRIPTION DE L'INVENTION

Dans le cadre de la réalisation de compositions bitumineuses, le demandeur à découvert de façon surprenante que l'utilisation de donneur de soufre liquide avait pour avantage, contrairement au soufre solide, même finement divisé, une diffusion homogène de ce dernier dans la matrice bitume/polymère améliorant ainsi les propriétés finales du PmB.

Il a également été découvert que l'utilisation d'alkyl polysulfure, en lieu et place de soufre solide, conduisait à une réduction significative des émissions d'H₂S lors de la fabrication et/ou utilisation de PmB.

Il a été également découvert que l'utilisation combinée d'un donneur de soufre liquide et d'un scavenger d'H₂S liquide permettait une réduction encore plus importante des émissions d'H₂S lors de la fabrication et/ou utilisation de PmB.

Enfin, il a été également découvert que l'utilisation de tels additifs sous forme liquide était un vrai avantage industriel de part la sécurité que cela apporte comparativement à l'utilisation de soufre pulvérulent.

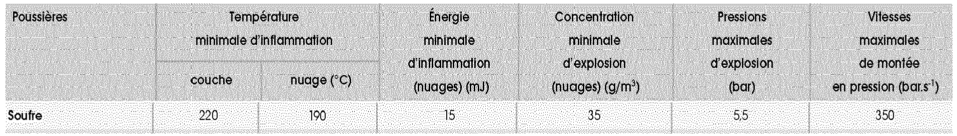

Il est ici rappelé que le terme anglo-saxon « scavenger d'H₂S » désigne un agent apte à neutraliser et/ou piéger le sulfure d'hydrogène.

Selon l'invention, l'objectif de l'invention est atteint via l'utilisation d'un additif seul choisi parmi les polysulfures d'alkyle, aliphatique, alicyclique ou aromatique.

Le polysulfure d'alkyle est avantageusement choisi, mais de façon non restrictive, parmi le disulfure de dihexyle, disulfure de dioctyle, disulfure de didodécyle, disulfure de ditertiododécyle, disulfure de dihexidécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, trétrasulfure de dihexadécylc, pentasulfure de dihexyle, pentasulfure de dioctyle, pentasulfure de dinonyle, pentasulfure de ditertiododécyle, pentasulfure de dihexadécyle. D'autres polysulfures, qui peuvent être utilisés suivant l'invention, sont tels que le trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Selon un mode particulier de l'invention le donneur de soufre de type alkyle polysulfure est un produit liquide.

Selon l'invention, le but de l'invention peut également être atteint par l'utilisation combinée d'un polysulfure d'alkyle et d'un scavenger d'H₂S sélectionné parmi les sels métalliques organiques ou inorganiques.

Le scavenger d' H₂S est, avantageusement, choisi parmi les sels métalliques consistant aux oxydes, hydroxydes, hydrates, carbonates, hydrycarbonates, craboxylates, nitrates, phosphates et leurs mélanges.

Selon un mode particulier de l'invention le scavenger d'H₂S est un produit liquide faisant partie des familles d'oxydes métalliques précédemment citées.

Selon un autre mode particulier de l'invention le métal constituant le sel métallique se trouve parmi, le zinc, cadmium, mercure, cuivre, argent, nickel, platine, fer et/ou magnésium ou encore des mélanges de différents sels.

Selon l'invention, le but de l'invention est également atteint par un procédé de préparation d'une composition bitumineuse, dans lequel on met en contact du bitume, de 0,5% à 10% en masse, de préférence entre 1% et 6% en masse, plus préférentiellement entre 1,5% et 4% en masse d'un élastomère, et d'un agent de couplage donneur de soufre ajouté en quantité propre à fournir de 0,1 % à 20% en masse, avantageusement de 1% à 10% en masse, de préférence de 1% à 6% en masse, plus préférentiellement de 2% à 5% en masse de soufre libre par rapport à la masse d'élastomère réticulable au soufre dans ladite composition en opérant à des températures comprises entre 90°C et 200°C, de préférence entre 120°C et 200°C, plus préférentiellement entre 170°C et 190°C, et sous agitation pendant une durée d'au moins 10 minutes, avantageusement d'au moins 2 heures, de préférence entre 20 minutes et 6 heures, plus préférentiellement entre 30 minutes et 2 heures, ledit agent donneur de soufre étant tel que définis ci-dessus. Etant entendu que la composition bitumineuse obtenue est alors une composition bitume/polymère et que les pourcentages massiques sont calculés par rapport à la masse totale de la composition bitume/polymère.

Selon un mode de réalisation particulier de l'invention, l'agent de couplage est une composition dans laquelle on retrouve un alkyl polysulfure et un scavenger d'H₂S.

Selon un autre mode particulier de l'invention la composition de couplage est composé de 50% à 70% d'alkyle polysulfure et de 30% à 50% de scavenger d'H₂S, de préférence entre 60% et 70% d'alkyle polysulfure et de 30% à 40% de scavenger d'H₂S et.

Selon une variante préférée, l'élastomère est choisi parmi les copolymères statistiques ou séquencés d'un hydrocarbure monovinyl aromatique et d'un diène conjugué.

L'élastomère comprend, avantageusement, entre 5 % et 50% en masse, de préférence entre 15% et 40% en masse d'hydrocarbure monovinyl aromatique.

L'élastomère est, de préférence, choisi parmi les copolymères statistiques ou séquencés de styrène et d'un diène conjugué.

Selon un développement particulier, la masse moléculaire moyenne en masse de l'élastomère est comprise entre 10 000 et 600 000 daltons, de préférence entre 30 000 et 400 000 daltons.

Selon l'invention, le but de l'invention est également atteint par une composition bitumineuse susceptible d'être obtenue par le procédé de préparation tel que défini ci-dessus.

L'invention concerne également un liant bitumineux comprenant une composition bitumineuse telle que définie ci-dessus.

L'invention concerne également un asphalte comprenant un liant bitumineux tel que décrit ci-dessus, et des charges minérales et/ou synthétiques.

L'invention concerne en outre un enrobé bitumineux comprenant un liant bitumineux tel que décrit ci-dessus, des granulats, et éventuellement des charges minérales et/ou synthétiques.

### DESCRIPTION DETAILLEE DE L'INVENTION

D'autres avantages et caractéristiques ressortiront plus clairement de la description qui va suivre et dont les modes particuliers de réalisation de l'invention sont donnés à titre d'exemples non limitatifs.

Selon un mode de réalisation particulier, un agent réticulant est utilisé pour améliorer les performances des PmB et en réduire les émissions d'H₂S.

Les agents de réticulation acceptables, dans un mode de réalisation non limitatif de l'invention, sont les polysulfures de thiurame. Dans un autre mode de réalisation non limitatif de l'invention, les polysulfures de thiurame ont la formule: 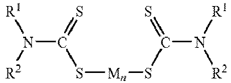 où R1 et R2 sont des substituants alkyle identiques ou différents ayant de 1 à 4 atomes de carbone, et où M est un métal choisi parmi le zinc, le baryum ou le cuivre et n vaut 0 ou 1. Dans un autre mode de réalisation non limitatif de l'invention, une plage de température de réticulation pour les polysulfures de thiurame de formule (I) est supérieure à 180 ° C en variante, la plage de température de réticulation peut être comprise entre 130 et environ 205 ° C. Les polysulfures de thiurame dans le contexte de cette invention comprennent, mais sans s'y limiter des dialkyldithiocarbamates tels que le diméthyl dithiocarbamate.

Dans encore un autre mode de réalisation non limitatif de l'invention, le dérivé contenant du soufre exclut le soufre élémentaire ajouté, en soi.

Comme noté, les agents de réticulation selon l'invention sont un alkylpolysufide, mais dans un mode de réalisation non limitatif de l'invention, on peut également préparer un mélange d'un polysulfure d'alkyle avec des dérivés de zinc. Il a été découvert de manière surprenante que ces nouveaux agents de réticulation peuvent remplacer partiellement ou entièrement les agents de réticulation classiques décrits ci-dessus, tels que le soufre, pour donner des PmB de propriétés améliorées. Les quantités proportionnelles de ces nouveaux agents de réticulation sont identiques aux agents de réticulation conventionnels, et dans un autre mode de réalisation non restrictif ont des proportions de soufre équivalentes, c'est-à-dire les mêmes teneurs en soufre que celles des agents de réticulation conventionnels précédemment discutés.

Dans un autre mode de réalisation non limitatif, l'alkylpolysulfure présente la structure suivante :

R1-(S)m-(R-(S)m)x-R2

Dans laquelle R1 et R2 désignent chacun un radical hydrocarboné monovalent, saturé ou insaturé, en C1 à C20 ou sont reliés entre eux pour constituer un radical hydrocarboné divalent en C1 à C20, saturé ou insaturé, formant un cycle avec les autres groupements d'atomes associés dans la formule, R est un radical hydrocarboné divalent, saturé ou insaturé, en C1 à C20, les -(S)m- représentent des groupements divalents formes chacun de m atomes de soufre, les m pouvant être différents de l'un desdits groupements à l'autre et désignant des nombres entiers allant de 1 à 6 avec au moins l'un des m égal ou supérieur à 2, et x représente un nombre entier prenant les valeurs de zéro à 10.

Dans la formule précitée, les radicaux hydrocarbonés monovalents R1 et R2 en C1 à C20 ainsi que le radical hydrocarboné divalent R en C1 à C20 sont choisis notamment parmi les radicaux aliphatiques, alicycliques ou aromatiques. Lorsque les radicaux R1 et R2 sont reliés entre eux pour constituer un radical hydrocarboné divalent en C1 à C20 formant un cycle avec les autres groupements d'atomes associés dans la formule, ledit radical divalent est similaire au radical R et peut être également du type aliphatique, alicyclique, ou aromatique. En particulier les radicaux R1 et R2 sont identiques et choisis parmi les radicaux alcoyles en C1 à C20, par exemple éthyle, propyle, héxyle, octyle, nonyle, décyle, dodécyle linéaire, tertio-dodécyle, hexadécyle, octadécyle et les radicaux cycloalcoyles et aryles en C6 à C20, notamment benzyle, phényle, tolyle, cyclohéxyle, tandis que le radical R ou le radical divalent formés par la réunion de R1 et R2 sont choisis parmi les radicaux alcoylènes en C1 à C20 ou les radicaux cycloalcoylènes ou arylènes, notamment phénylène, tolylène, cyclohexylène, en C6 à C20.

Des polysulfures utilisables selon l'invention sont en particulier ceux définis par la formule

R1-(S)n-R2

Dans laquelle R1 et R2 désignent chacun un radical hydrocarboné monovalent, saturé ou insaturé, en C1 à C20 ou sont reliés entre eux pour constituer un radical hydrocarboné R divalent en C1 à C20, R1, R2 et R ayant les significations précédentes, -(S)n- représente un groupement divalent formé par un enchainement de n atomes de soufre, et n étant un nombre entier allant de 2 à 6.

Des polysulfures préférés répondent à la formule générale R3-(S)p-R3, dans laquelle R3 désigne un radical alcoyle en C6 à C16, et -(S)p- représente un groupement divalent formé par un enchainement de p atomes de soufre, p étant un nombre entier allant de 2 à 5. Des exemples de tels polysulfures sont notamment disulfure de dihexyle, disulfure de dioctyle, disulfure de didodécyle, disulfure de ditertiododécyle, disulfure de dihexidécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, trétrasulfure de dihexadécylc, pentasulfure de dihexyle, pentasuifure de dioctyle, pentasulfure de dinonyle, pentasulfure de ditertiododécyle, pentasulfure de dihexadécyle.

D'autres polysulfures, qui peuvent être utilisés suivant l'invention, sont par exemple le trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Selon un autre mode de réalisation particulier un paquet d'additifs de performance comprend un agent réticulant donneur de soufre et un scavenger d'H₂S.

On entend par paquet d'additifs, une composition comprenant au moins deux additifs. Le paquet d'additifs peut contenir des additifs seuls ou dispersés/solubilisés dans un solvant inerte, en particulier de type huile minérale, selon des procédés bien connus dans le domaine des additifs pour bitume. Dans le domaine de l'additivation, on utilise également couramment le terme anglais « package » pour identifier une composition d'additifs. Le terme « concentré d'additifs » peut également être employé pour désigner le paquet d'additif, en particulier lorsque celui-ci se présente sous forme d'une solution.

On entend par additifs de performance pour bitume ou composition bitumineuse, des additifs aptes à être incorporés dans une composition bitumineuse, par exemple relativement à leur compatibilité, leur solubilité ou leur stabilité dans ledit bitume ou ladite composition bitumineuse et lui conférant des propriétés améliorées comparativement au bitume ou à la composition bitumineuse non additivée. Ces propriétés peuvent être mécaniques et/ou dynamiques, et/ou concerner des problématiques d'environnement et de sécurité, par exemple des problématiques d'émissions d'H₂S.

Le donneur de soufre est, de préférence, choisi parmi les polysulfures d'alkyle comme défini ci-avant.

Selon un mode de réalisation particulier préféré, le scavenger d'H₂S est choisi parmi le groupe consistant en les oxydes, les hydroxydes, les carbonates, les hydroxy-carbonates, et les carboxylates de zinc et leurs mélanges. Les oxydes, les hydroxy-carbonates et les carboxylates de zinc sont particulièrement efficaces.

Le rapport massique du scavenger d'H₂S par rapport au donneur de soufre peut avantageusement être compris entre 1 : 300 et 100 : 1, de préférence entre 1 : 10 et 10 : 1, plus préférentiellement entre 1 : 10 et 5 : 1. Le paquet d'additifs de performance peut être constitué uniquement du scavenger d'H₂S et du donneur de soufre, seuls ou en mélange dans un ou plusieurs solvants inertes, étant entendu que lesdits scavenger d'H₂S et donneur de soufre peuvent contenir respectivement jusqu'à 2% massique d'impuretés sans pour autant que l'on considère qu'ils ne sont pas utilisés seuls. Le solvant doit être inerte vis-à-vis de l'adjuvant acide et/ou du scavenger d'H₂S.

De façon générale, la quantité de solvant dans le paquet d'additifs est comprise entre 0% et 95%, de préférence entre 0% et 90%, plus préférentiellement entre 0% et 80% en masse, les pourcentages massiques étant calculés par rapport à la masse totale dudit paquet d'additifs.

On choisira, de préférence, le ou les solvants inertes de manière à solubiliser à la fois le scavenger d'H₂S et le donneur de soufre. On choisira, par exemple, le solvant parmi les huiles minérales. Un tel paquet d'additifs est stable au stockage et peut être ajouté directement lors de la préparation de la composition bitume/polymère réticulé.

Le paquet d'additifs peut être utilisé directement pour le traitement du bitume ou de compositions bitumineuses. En particulier, le paquet d'additifs est utilisé dans le procédé de préparation de compositions bitume/polymère réticulé. Selon une variante, le scavenger d'H₂S et le donneur de soufre tels que décrits ci-dessus peuvent être utilisés séparément pour le traitement du bitume ou de compositions bitumineuses, en particulier pour la préparation de compositions bitume/polymère, de préférence de compositions bitume/polymère réticulé mettant en oeuvre un agent de couplage donneur de soufre.

Selon un mode de réalisation particulier, un procédé de préparation d'une composition bitume/polymère réticulé comprend une étape de traitement avec le donneur de soufre et le scavenger d'H₂S décrits ci-dessus à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 30 minutes et 2 heures.

Selon un mode de réalisation particulier, le procédé de préparation d'une composition bitume/polymère réticulé comprend, par exemple, les étapes suivantes :
- un bitume et un élastomère réticulable au soufre sont introduits dans un réacteur,
- le mélange est agité jusqu'à obtention d'un mélange bitume/élastomère homogène et chauffé à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 1 heure et 5 heures,
- ledit élastomère est réticulé par ajout de l'agent de couplage donneur de soufre seul, dans le milieu réactionnel en quantité propre à fournir de 0,1% à 20% en masse, avantageusement de 1% à 10% en masse, de préférence de 1% à 6% en masse de soufre libre, par rapport à la masse totale de l'élastomère et en maintenant le milieu réactionnel sous agitation à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 30 minutes et 2 heures,

Selon un autre mode de réalisation particulier, le procédé de préparation d'une composition bitume/polymère réticulé comprend, par exemple, les étapes suivantes :
- un bitume et un élastomère réticulable au soufre sont introduits dans un réacteur,
- le mélange est agité jusqu'à obtention d'un mélange bitume/élastomère homogène et chauffé à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 1 heure et 5 heures,
- ledit élastomère est réticulé par ajout d'une composition réticulante selon l'invention en quantité propre à fournir de 0,1% à 20% en masse, avantageusement de 1% à 10% en masse, de préférence de 1% à 6% en masse de soufre libre, par rapport à la masse totale de l'élastomère et en maintenant le milieu réactionnel sous agitation à une température comprise entre 90°C et 200°C, de préférence entre 120°C et 200°C, plus préférentiellement entre 170°C et 190°C, pendant une durée d'au moins 10 minutes, de préférence comprise entre 20 minutes et 6 heures, plus préférentiellement comprise entre 30 minutes et 2 heures. Pour chaque étape, les températures peuvent être identiques ou non.

Le bitume selon la présente invention peut comporter une ou plusieurs bases bitume. Les bases bitume peuvent être issues de différentes origines. On peut citer tout d'abord les bases bitumes d'origine naturelle, celles contenues dans des gisements de bitume naturel, d'asphalte naturel ou les sables bitumineux. Les bases bitume peuvent, avantageusement, provenir du raffinage du pétrole brut, de préférence, de la distillation atmosphérique et/ou sous vide du pétrole. Les bases bitume peuvent éventuellement être soufflées, viscoréduites et/ou désasphaltées.

Le terme « bitume » se réfère à tout liant issu d'un ou plusieurs procédés de raffinage du pétrole, mais également aux liants dits de synthèse et aux bio-liants tels que ceux décrits dans les brevet d'invention (WO 2015/044891) ou (EP 1 466 878 A1) ou encore (FR 2 955 586). Le choix du bitume dépendra essentiellement de l'application particulière envisagée pour la composition bitumineuse résultante.

Les bases bitume peuvent être choisies parmi les bitumes de grade dur ou de grade mou. Les différentes bases bitumes obtenues par les procédés de raffinage peuvent être combinés entre elles pour obtenir le meilleur compromis technique.

Les bases bitume utilisées peuvent également être choisies parmi les bitumes fluxés par addition de solvants volatils, de fluxants d'origine pétrolière et/ou de fluxants d'origine végétale.

Le bitume est, avantageusement, choisi parmi les bitumes routiers de classes 10/20 à 160/220 et les bitumes spéciaux de toutes classes. Le bitume représente entre 90% et 99,3% en masse, de préférence entre 94% et 99% en masse de la composition bitume/polymère réticulé. Le donneur de soufre représente, avantageusement, entre 0,05% et 5% en masse, de préférence entre 0,05% et 2% en masse, plus préférentiellement entre 0,05% et 1% en masse de la masse totale de la composition bitume/polymère réticulé.

Dans le second mode particulier de l'invention, le bitume est, avantageusement, choisi parmi les bitumes routiers de classes 10/20 à 160/220 et les bitumes spéciaux de toutes classes. Le bitume représente entre 90% et 99,3% en masse, de préférence entre 94% et 99% en masse de la composition bitume/polymère réticulé. La composition réticulante représente, avantageusement, entre 0,05% et 5% en masse, de préférence entre 0,05% et 2% en masse, plus préférentiellement entre 0,05% et 1% en masse de la masse totale de la composition bitume/polymère réticulé.

La quantité d'élastomère introduit dans le réacteur représente, avantageusement, entre 0,5% et 10% en masse, de préférence entre 1% et 6% en masse, plus préférentiellement entre 1,5% et 4% en masse de la masse totale de la composition bitume/polymère réticulé.

La masse moléculaire moyenne en masse de l'élastomère est, avantageusement, comprise entre 10 000 et 600 000 daltons, de préférence entre 30 000 et 400 000 daltons. L'élastomère est, de préférence, choisi parmi les copolymères statistiques ou séquencés d'un hydrocarbure monovinyl aromatique et d'un diène conjugué. En particulier, l'élastomère comprend, avantageusement, entre 5% et 50% en masse, de préférence entre 15% et 40% en masse d'hydrocarbure monovinyl aromatique. L'élastomère est, avantageusement, choisi parmi les copolymères statistiques ou séquencés de styrène et d'un diène conjugué tel que butadiène, isoprène, chloroprène, butadiène carboxylé, isoprène carboxylé. On choisira, de préférence, les copolymères statistiques ou séquencés de styrène et de butadiène. L'élastomère peut consister en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé.

De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé qui ont des teneurs en styrène et des masses moléculaires moyennes en masse situées dans les intervalles définis précédemment.

Selon une variante, l'élastomère est choisi parmi les copolymères statistiques ou séquencés de styrène et de butadiène renfermant de 50% à 95%, plus particulièrement de 60% à 95% en masse de motifs issus du butadiène. En outre, la proportion de motifs à double liaison 1,2 issus du butadiène peut, avantageusement, être comprise entre 12% et 50% en masse dudit copolymère. L'élastomère peut, par exemple, être un copolymère styrène/butadiène de type haut vinyle c'est-à-dire ayant une teneur en double liaison 1,2 issus du butadiène supérieure à 20% en masse dudit copolymère.

On peut également ajouter à la composition bitume/polymère réticulé des dopes d'adhésivité et/ou des agents tensioactifs selon tout procédé connu. Ils sont généralement choisis parmi les dérivés d'alky lamines, les dérivés d'alkyl-polyamines, les dérivés d'alkylamidopolyamines, les dérivés d'alkyl amidopolyamines, les dérivés de sels d'ammonium quaternaire, et les dérivés phosphatés de type esters d'acide phosphorique et d'acide phosphonique pris seuls ou en mélange. La quantité de dopes d'adhésivité et/ou des agents tensioactifs dans la composition bitume/polymère réticulé est, par exemple, comprise entre 0,1% et 2% en masse, de préférence entre 0,2% et 1% en masse par rapport à la masse totale de la composition bitume/polymère réticulé.

L'ordre d'introduction des différents constituants ne semble pas avoir d'influence sur les propriétés mécaniques et/ou dynamiques de la composition bitume/polymère réticulé ainsi obtenue. On préférera néanmoins ajouter l'élastomère avant ou en même temps que l'agent de couplage donneur de soufre pour une meilleure homogénéité de la composition. Selon une variante, l'élastomère et l'agent de couplage donneur de soufre peuvent être introduits simultanément sous forme d'une solution mère, selon tout procédé connu, lors du procédé de préparation de la composition bitume/polymère réticulé.

La solution mère comprend, généralement, une huile hydrocarbonée servant de fluidifiant, de 5% à 40% en masse d'élastomère et de 0,02% à 15% en masse d'agent de couplage, de préférence, de 10% à 35% en masse d'élastomère et de 0,1% à 5% en masse d'agent de couplage ou de composition de couplage.

Les compositions bitume/polymère réticulé peuvent être utilisées telles quelles ou bien diluées, selon tout procédé connu, avec des proportions variables de bitume ou d'une composition selon l'invention ayant des caractéristiques différentes pour constituer des liants bitume/polymère ayant une teneur choisie en élastomère réticulé, qui peut être soit égale (composition non diluée) ou bien inférieure (composition diluée) à la teneur en élastomère réticulé des compositions bitume/polymère initiales correspondantes. Généralement, la dilution des compositions bitume/polymère réticulé peut être réalisée soit directement à la suite de l'obtention desdites compositions, lorsqu'une utilisation quasi immédiate des liants bitume/polymère résultants est requise, ou bien encore après une durée de stockage plus ou moins prolongée des compositions bitume/polymère réticulé, lorsqu'une utilisation différée des liants bitume/polymère résultants est envisagée. Le bitume pour la dilution d'une composition bitume/polymère réticulé selon l'invention peut être choisi parmi les bitumes décrits ci-dessus. Les compositions bitume/polymère réticulé obtenues par le procédé de préparation décrit ci-dessus ont des propriétés mécaniques et dynamiques améliorées, notamment un caractère multigrade renforcé. On entend par caractère multigrade renforcé, le fait que ces compositions bitume/polymère réticulé présentent un large intervalle de plasticité. Ledit intervalle est défini comme la différence entre la température de ramollissement bille et anneau, révélatrice des propriétés à chaud du liant ou composition bitume/polymère, et le point de fragilité Fraass, révélateur des propriétés à froid de la composition bitume/polymère réticulé. Le liant bitumineux consistant en/ou à base de la composition bitume/polymère réticulé résistera d'autant mieux aux sollicitations à chaud et à froid que l'intervalle de plasticité est plus large.

De façon plus générale, les compositions bitumineuses obtenues par le procédé de préparation selon la présente invention présentent des propriétés mécaniques et dynamiques améliorées, notamment une meilleure consistance, avec une pénétrabilité à l'aiguille à 25°C plus faible et/ou une température bille anneau plus élevée.

En outre, aux températures de préparation et/ou d'utilisation (transport, chargement, déchargement et stockage) classiquement comprises entre 90°C et 200°C, les émissions d'H₂S provenant des compositions bitumineuses, en particulier des compositions bitume/polymère réticulé selon l'invention sont fortement réduites. Le taux en H₂S émis est, en particulier, inférieur à 10 ppm, plus préférentiellement inférieur ou égal à 1 ppm, le taux en H₂S étant mesuré selon une méthode classique de titration d'H₂S en phase liquide.

Selon un mode de réalisation particulier, un liant bitumineux comprend une composition bitumineuse telle que décrite ci-dessus.

Le liant bitumineux selon l'invention peut à son tour être employé pour préparer une association avec des granulats, notamment routiers.

S'agissant des applications routières, l'invention vise notamment des enrobés bitumineux comme matériaux pour la construction et l'entretien des corps de chaussée et de leur revêtement, ainsi que pour la réalisation de tous travaux de voiries.

Par enrobé bitumineux, on entend, un mélange d'un liant bitumineux avec des granulats et, éventuellement, des charges minérales et/ou synthétiques. L'enrobé bitumineux comprend un liant bitumineux tel que décrit ci-dessus, et éventuellement des charges minérales et/ou synthétiques, de préférence, choisies parmi des fines, du sable, des gravillons et des fraisais de recyclage. Les granulats sont des granulats minéraux et/ou synthétiques, notamment des fraisais de recyclage, de dimensions supérieures à 2 mm, de préférence comprises entre 2 mm et 20 mm.

Le liant bitumineux décrit ci-dessus peut, avantageusement, être utilisé pour préparer un enduit superficiel, un enrobé à chaud, un enrobé à froid, un enrobé coulé à froid ou une grave émulsion.

S'agissant des applications routières, l'invention vise également des asphaltes comme matériaux pour fabriquer et recouvrir des trottoirs.

Par asphalte, on entend, un mélange de liant bitumineux avec des charges minérales et/ou synthétiques.

Un asphalte comprend un liant bitumineux tel que décrit ci-dessus et des charges minérales telles que des fines, du sable ou des gravillons et/ou des charges synthétiques. Les charges minérales sont constituées de fines (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm).

Les asphaltes présentent 100% de compacité et sont principalement utilisés pour fabriquer et recouvrir des trottoirs, alors que les enrobés possèdent une compacité inférieure à 100% et sont utilisés pour fabriquer des routes. Contrairement aux enrobés, les asphaltes ne sont pas compactés au rouleau lors de leur mise en place.

Un autre aspect de l'invention est l'utilisation d'une composition bitumineuse, de préférence une composition bitume/polymère réticulé dans diverses applications industrielles, notamment pour préparer un revêtement d'étanchéité, une membrane ou une couche d'imprégnation. S'agissant des applications industrielles des compositions bitumineuses, on peut citer la préparation de membranes d'étanchéité, de membranes anti-bruit, de membranes d'isolation, des revêtements de surface, des dalles de moquette, des couches d'imprégnation.

### EXEMPLES

L'invention est illustrée par les exemples suivants donnés à titre non limitatif.

Dans ces exemples, les quantités et pourcentages sont exprimés en masse sauf indication contraire.

Pour mémoire, dans toute la présente demande, les propriétés suivantes des bitumes sont mesurées comme indiqué dans le tableau 1 ci-dessous :

**Tableau 1**

| **Propriété** | **Abréviation** | **Unité** | **Norme de mesure** |
|---|---|---|---|
| Pénétrabilité à l'aiguille à 25°C | P25 | 1/10mm | EN 1426 |
| Température de ramollissement bille et anneau | TBA | °C | EN 1427 |
| Point de fragilité Fraass | Fraass | °C | EN 12593 |

### Bitumes

Deux bitumes 70/100 ont été utilisés, le premier obtenu par distillation directe, le second par distillation directe et ajout de base visco-réduite. Ces deux bitumes sont ci-après respectivement dénommés : B1 et B2. Ils présentent les caractéristiques mentionnées dans le tableau 2

**Tableau 2**

| **Abréviation** | **Unité** | **Norme de mesure** | **B1** | **B2** |
|---|---|---|---|---|
| P25 | 1/10mm | EN 1426 | 75 | 80 |
| TBA | °C | EN 1427 | 43,8 | 46,0 |
| Fraass | °C | EN 12593 | - | - |
| BBR | °C | EN 14771 | - | - |

### Elastomère

L'élastomère utilisé est un copolymère séquencé styrène/butadiène/styrène linéaire, à 31% en poids de styrène et à 69% en poids de butadiène. Le copolymère a une masse moléculaire en poids (Mw) de 170 000 Daltons et présente une teneur de 16% de motifs diblocks et 80% de triblocks.

### Composition de bitume/polymère non réticulé PmB PB1 et PmB PB2

On prépare les compositions bitume/polymère non réticulé selon le procédé de préparation suivant :
1 Chauffage du bitume 70/100 à 180°C
2 Ajout de 4% en masse d'élastomère et cisaillement à fort taux (8000rpm) pendant 45 minutes.
3 Cisaillement à faible taux pendant 3 heures à 800rpm toujours à 180°C
4 Maturation pendant 12 heures à 165°C

### Composition de bitume/polymère réticulé PmB XL 1 et PmB XL 2

On prépare les compositions bitume/polymère réticulé selon le procédé de préparation suivant :
1 Chauffage du bitume 70/100 à 180°C
2 Ajout de 4% en masse d'élastomère et cisaillement à fort taux (8000rpm) pendant 30 minutes.
3 Ajout de 0,15% de réticulant ou de la composition réticulante selon l'invention et cisaillement à fort taux (8000rpm) pendant 30 minutes.
4 Cisaillement à faible taux pendant 3 heures à 800rpm toujours à 180°C
5 Maturation pendant 12 heures à 165°C

### Propriétés des compositions bitume/polymère

Les propriétés données ci-après ont été mesurées après vieillissement RTFOT du liant.

**Tableau 3**

| **PmB** | **Unité** | **Norme de mesure** | **PB 1** | **XL1** | **PB2** | **XL2** |
|---|---|---|---|---|---|---|
| P25 | 1/10mm | EN 1426 | 39 | 45 | 39 | 46 |
| TBA | °C | EN 1427 | 58 | 69,2 | 80 | 70 |
| Fraass | °C | EN 12593 | -14 | -20 | -18 | -20 |
| Intervalle de plasticité - IP | °C | - | 72 | 89,2 | 98 | 90 |
| BBR - Delta Tc | °C | EN 14771 | 0,1 | 0,5 | -2,0 | 0,9 |

L'intervalle de plasticité est mesuré comme l'écart entre TBA et Fraass. Pour le bitume B1 on observe assez facilement l'impact de la réticulation sur l'intervalle de plasticité des liants. L'IP du liant réticulé est supérieur à celui du mélange physique de plus de 17°C.

Pour le bitume B2, l'IP ne permet pas de conclure de la même façon. L'IP du mélange physique est supérieur à celui du mélange réticulé. Pour autant, si on regarde le comportement au vieillissement traduit par la notion de Delta Tc (différence de températures critiques), on observe que le liant réticulé est nettement moins sensible au vieillissement que ne l'est le mélange physique.

En conclusion, le procédé de préparation des compositions bitumineuses selon l'invention permet de nettement améliorer les propriétés des liants ainsi fabriqués. Ces améliorations se traduisent via l'obtention d'un intervalle de plasticité plus large comparativement à un mélange physique et/ou via une amélioration des propriétés de stabilité au vieillissement via le Delta Tc.

## Revendications

1. Agent donneur de soufre liquide réticulant pour bitume modifié polymère ou compositions bitumineuses modifiées polymères choisi parmi les polysulfures d'alkyle.

2. Composition réticulante liquide comprenant un polysulfure d'alkyle de la revendication 1, et au moins un scavenger d'H₂S.

3. Paquet d'additifs liquide selon les revendications 1 ou 2, **caractérisé en ce que** le réticulant est choisi parmi les disulfure de dihexyle, disulfure de dioctyle, disulfure de didodécyle, disulfure de ditertiododécyle, disulfure de dihexidécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, trétrasulfure de dihexadécylc, pentasulfure de dihexyle, pentasuifure de dioctyle, pentasulfure de dinonyle, pentasulfure de ditertiododécyle, pentasulfure de dihexadécyle, trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.scavenger et le scavenger d'H₂S choisi parmi les sels de zinc du groupe consistant en les oxydes, les hydroxydes, les hydrates, les carbonates, les hydroxy-carbonates, les carboxylates, les nitrates, les phosphates de zinc et leurs mélanges.

4. Utilisation d'un agent réticulant liquide permettant d'améliorer l'intervalle de plasticité des liants modifiés polymère, ledit agent étant tel que décrit dans les revendications 1 et 3.

5. Utilisation d'un agent réticulant liquide permettant d'améliorer le Delta Tc des bitumes modifiés polymère, ledit agent étant tel que décrit dans les revendications 1 et 3

6. Utilisation d'un agent réticulant liquide permettant d'améliorer la stabilité au stockage des bitumes modifiés polymère, ledit agent étant tel que décrit dans les revendications 1 et 3

7. Utilisation d'une composition réticulante liquide permettant d'améliorer les propriétés des bitumes modifiés polymère, ladite composition réticulante étant telle que décrite dans les revendications 2 et 3.

8. Utilisation d'une composition réticulante liquide permettant d'améliorer l'intervalle de plasticité des bitumes modifiés polymère, ladite composition réticulante étant telle que décrite dans les revendications 2 et 3.

9. Utilisation d'une composition réticulante liquide permettant d'améliorer le delta Tc des bitumes modifiés polymère, ladite composition réticulante étant telle que décrite dans les revendications 2 et 3.

10. Utilisation d'une composition réticulante liquide permettant d'améliorer la stabilité au stockage des bitumes modifiés polymère, ladite composition réticulante étant telle que décrite dans les revendications 2 et 3.

11. Utilisation d'un agent réticulant liquide permettant de réduire les émissions d'H₂S des bitumes modifiés polymère réticulés comparativement au soufre solide, ledit agent étant tel que décrit dans les revendications 1 et 3.

12. Utilisation d'une composition réticulante liquide permettant de réduire les émissions d'H₂S des bitumes modifiés polymère réticulés comparativement au soufre solide, ladite composition réticulante étant telle que décrite dans les revendications 2 et 3.

13. Procédé de préparation d'une composition bitumineuse, **caractérisé en ce que** l'on met en contact du bitume, de 0,5% à 10% en masse d'un élastomère (les pourcentages massiques étant calculés par rapport à la masse totale de la composition bitume/polymère), et un agent réticulant ou une composition réticulante liquide ajouté en quantité propre à fournir de 0,01 % à 20% en masse de soufre libre par rapport à la masse d' élastomère réticulable au soufre dans ladite composition en opérant à des températures comprises entre 90°C et 200°C et sous agitation pendant une durée d'au moins 10 minutes, lesdits agents réticulants ou compositions réticulantes étant tels que décrits dans l'une quelconque des revendications 1 à 10, et étant entendu que la composition bitumineuse résultante est alors un bitume modifié polymère réticulé.

14. Procédé selon la revendication 11, **caractérisé en ce que** l'élastomère est choisi parmi les élastomères réticulables au soufre.

15. Procédé selon les revendications 11 et 12, **caractérisé en ce que** l'élastomère est choisi parmi les copolymères statistiques ou séquencés d'un hydrocarbure monovinyl aromatique et d'un diène conjugué.

16. Procédé selon l'une des revendications 11 à 13, **caractérisé en ce que** l'élastomère comprend entre 5 % et 50% en masse d'hydrocarbure monovinyl aromatique.

17. Procédé selon l'une des revendications 11 et 12, **caractérisé en ce que** l'élastomère est choisi parmi les copolymères statistiques ou séquencés de styrène et d'un diène conjugué.

18. Procédé selon l'une quelconque des revendications 11 à 15, **caractérisé en ce que** la masse moléculaire moyenne en masse de l'élastomère est comprise entre 10 000 et 600 000 daltons.

19. Utilisation d'un agent réticulant liquide selon les procédés 13 à 18 permettant de réduire les émissions d'H₂S comparativement au soufre solide lors de la fabrication du bitume modifié réticulé, ledit agent étant tel que décrit dans les revendications 1 et 3.

20. Utilisation d'une composition réticulante liquide selon les procédés 13 à 18 permettant de réduire les émissions d'H₂S comparativement au soufre solide lors de la production du bitume modifié réticulé, ladite composition réticulante étant telle que décrite dans les revendications 2 et 3.

21. Composition bitumineuse susceptible d'être obtenue par le procédé de préparation tel que défini dans l'une quelconque des revendications 13 à 18.

22. Liant bitumineux **caractérisé en ce qu'**il comprend une composition bitumineuse telle que définie dans la revendication 13.

23. Asphalte **caractérisé en ce qu'**il comprend un liant bitumineux selon la revendication 22, et des charges minérales et/ou synthétiques.

24. Enrobé bitumineux **caractérisé en ce qu'**il comprend un liant bitumineux selon la revendication 22 et des granulats, éventuellement des charges minérales et/ou synthétiques, et éventuellement des dopes d'adhesivité.
